(19) Europäisches Patentamt
European Patent Office
Office européen des brevets

(11) EP 1 531 415 B1

(12) **EUROPEAN PATENT SPECIFICATION**

(45) Date of publication and mention of the grant of the patent:
**07.06.2017 Bulletin 2017/23**

(51) Int Cl.:
***G06Q 40/04*** *(2012.01)*

(21) Application number: **04105906.4**

(22) Date of filing: **02.03.2001**

# (54) A device and method for facilitating trading having a recentering function

Handelsystem und -verfahren mit Einmittungsfunktion

Méthode et dispositif pour faciliter le commerce avec une function du centrage

(84) Designated Contracting States:
**AT BE CH CY DE DK ES FI FR GB GR IE IT LI LU MC NL PT SE TR**

(30) Priority: **09.06.2000 US 590692**
**02.03.2000 US 186322 P**

(43) Date of publication of application:
**18.05.2005 Bulletin 2005/20**

(62) Document number(s) of the earlier application(s) in accordance with Art. 76 EPC:
**01920183.9 / 1 319 211**

(73) Proprietor: **Trading Technologies International, Inc.
Chicago,
Illinois 60606 (US)**

(72) Inventors:
- **Kemp, Gary, Allan**
  **Winnetka, IL Illinois 60093 (US)**
- **Schluetter, Jens-Uwe**
  **Evanston, IL 60201 (US)**
- **Brumfield, Harris**
  **Chicago, IL 60614 (US)**

(74) Representative: **EIP
Fairfax House
15 Fulwood Place
London WC1V 6HU (GB)**

(56) References cited:
**WO-A-99/53424**
**WO-A1-98/49639**
**WO-A1-99/19821**
**US-A- 5 297 031**

- **"LIFFE CONNECT for FUTURES by GL TRADE", GL TRADE USER GUIDE, X, XX, vol. V4.51, 1 June 1999 (1999-06-01), page 56pp, XP007902552,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 531 415 B1

## Description

### Field of Invention

The present invention is directed to the electronic trading of commodities. Specifically, the invention provides a trader with a versatile and efficient tool for executing trades. It facilitates the display of and the rapid placement of trade orders within the market trading depth of a commodity, where a commodity includes anything that can be traded with quantities and/or prices.

### Background Of The Invention

At least 60 exchanges throughout the world utilize electronic trading in varying degrees to trade stocks, bonds, futures, options and other products. These electronic exchanges are based on three components: mainframe computers (host), communications servers, and the exchange participants' computers (client). The host forms the electronic heart of the fully computerized electronic trading system. The system's operations cover order-matching, maintaining order books and positions, price information, and managing and updating the database for the online trading day as well as nightly batch runs. The host is also equipped with external interfaces that maintain uninterrupted online contact to quote vendors and other price information systems.

Traders can link to the host through three types of structures: high speed data lines, high speed communications servers and the Internet. High speed data lines establish direct connections between the client and the host. Another connection can be established by configuring high speed networks or communications servers at strategic access points worldwide in locations where traders physically are located. Data is transmitted in both directions between traders and exchanges via dedicated high speed communication lines. Most exchange participants install two lines between the exchange and the client site or between the communication server and the client site as a safety measure against potential failures. An exchange's internal computer system is also often installed with backups as a redundant measure to secure system availability. The third connection utilizes the Internet. Here, the exchange and the traders communicate back and forth through high speed data lines, which are connected to the Internet. This allows traders to be located anywhere they can establish a connection to the Internet.

Irrespective of the way in which a connection is established, the exchange participants' computers allow traders to participate in the market. They use software that creates specialized interactive trading screens on the traders' desktops. The trading screens enable traders to enter and execute orders, obtain market quotes, and monitor positions. The range and quality of features available to traders on their screens varies according to the specific software application being run. The installation of open interfaces in the development of an exchange's electronic strategy means users can choose, depending on their trading style and internal requirements, the means by which they will access the exchange.

The world's stock, bond, futures and options exchanges have volatile products with prices that move rapidly. To profit in these markets, traders must be able to react quickly. A skilled trader with the quickest software, the fastest communications, and the most sophisticated analytics can significantly improve his own or his firm's bottom line. The slightest speed advantage can generate significant returns in a fast moving market. In today's securities markets, a trader lacking a technologically advanced interface is at a severe competitive disadvantage.

Irrespective of what interface a trader uses to enter orders in the market, each market supplies and requires the same information to and from every trader. The bids and asks in the market make up the market data and everyone logged on to trade can receive this information if the exchange provides it. Similarly, every exchange requires that certain information be included in each order. For example, traders must supply information like the name of the commodity, quantity, restrictions, price and multiple other variables. Without all of this information, the market will not accept the order. This input and output of information is the same for every trader.

With these variables being constant, a competitive speed advantage must come from other aspects of the trading cycle. When analyzing the time it takes to place a trade order for a given commodity, various steps contribute in different amounts to the total time required. Approximately 8% of the total time it takes to enter an order elapses between the moment the host generates the price for the commodity and the moment the client receives the price. The time it takes for the client application to display the price to the trader amounts to approximately 4%. The time it takes for a trade order to be transmitted to the host amounts to approximately 8%. The remainder of the total time it takes to place an order, approximately 80%, is attributable to the time required for the trader to read the prices displayed and to enter a trade order. The present invention provides a significant advantage during the slowest portion of the trading cycle - while the trader manually enters his order. Traders recognize that the value of time savings in this portion may amount to millions of dollars annually.

In existing systems, multiple elements of an order must be entered prior to an order being sent to market, which is time consuming for the trader. Such elements include the commodity symbol, the desired price, the quantity and whether a buy or a sell order is desired. The more time a trader takes entering an order, the more likely the price on which he wanted to bid or offer will change or not be available in the market. The market is fluid as many traders are sending orders to the market simultaneously. It fact, successful markets strive to have such a high volume of trading that any trader who wishes to enter an order will find a match and have the order filled quickly, if not immediately. In such liquid markets, the prices of the commodities fluctuate rapidly. On a trading screen, this results in rapid changes in the price and quantity fields within the market grid. If a trader intends to enter an order at a particular price, but misses the price because the market prices moved before he could enter the order, he may lose hundreds, thousands, even millions of dollars. The faster a trader can trade, the less likely it will be that he will miss his price and the more likely he will make money.

US 5,297,031 describes a broker workstation for managing orders in a market for trading commodities, securities and other tradeable objects. The workstation comprises a device for displaying order information; a computer for receiving orders and controlling the displaying device; and a device for entering orders into the computer. The displaying device comprises a device for displaying selected order information about each incoming order, a device for displaying a representation of an order deck and a device for displaying a total of market orders.

## Summary Of The Invention

According to aspects of the present invention there is provided a method, system and computer program according to the appended claims.

The inventors have developed the present invention which overcomes the drawbacks of the existing trading systems and dramatically reduces the time it takes for a trader to place a trade when electronically trading on an exchange. This, in turn, increases the likelihood that the trader will have orders filled at desirable prices and quantities.

The "Mercury" display and trading method of the present invention ensure fast and accurate execution of trades by displaying market depth on a vertical or horizontal plane, which fluctuates logically up or down, left or right across the plane as the market prices fluctuates. This allows the trader to trade quickly and efficiently.

Some embodiments include a graphical user interface for displaying the market depth of a commodity traded in a market, including a dynamic display for a plurality of bids and for a plurality of asks in the market for the commodity and a static display of prices corresponding to the plurality of bids and asks. In this embodiment the pluralities of bids and asks are dynamically displayed in alignment with the prices corresponding thereto. Also described herein is a method and system for placing trade orders using such displays.

These embodiments, and others described in greater detail herein, provide the trader with improved efficiency and versatility in placing, and thus executing, trade orders for commodities in an electronic exchange. Other features and advantages of the present invention will become apparent to those skilled in the art from the following detailed description. It should be understood, however, that the detailed description and specific examples, while indicating preferred embodiments of the present invention, are given by way of illustration and not limitation.

## Brief Description Of The Drawings

Figure 1 illustrates the network connections between multiple exchanges and client sites;
Figure 2 illustrates screen display showing the inside market and the market depth of a given commodity being traded;
Figure 3 illustrates the Mercury display of the present invention;
Figure 4 illustrates the Mercury display at a later time showing the movement of values when compared to Figure 3;
Figure 5 illustrates a Mercury display with parameters set in order to exemplify the Mercury trading method; and
Figure 6 is a flowchart illustrating the process for Mercury display and trading.

## Detailed Description Of The Preferred Embodiments

As described with reference to the accompanying figures, the present invention provides a display and trading method to ensure fast and accurate execution of trades by displaying market depth on a vertical or horizontal plane, which fluctuates logically up or down, left or right across the plane as the market prices fluctuates. This allows the trader to place trade orders quickly and efficiently. A commodity's market depth is the current bid and ask prices and quantities in the market. The display and trading method of the invention increase the likelihood that the trader will be able to execute orders at desirable prices and quantities.

In the preferred embodiment, the present invention is implemented on a computer or electronic terminal. The computer is able to communicate either directly or indirectly (using intermediate devices) with the exchange to receive and transmit market, commodity, and trading order information. It is able to interact with the trader and to generate contents and characteristics of a trade order to be sent to the exchange. It is envisioned that the system of the present invention can be implemented on any existing or future terminal or device with the processing capability to perform the functions described herein. The scope of the present invention is not limited by the type of terminal or device used. Further, the specification refers to a single click of a mouse as a means for user input and interaction with the terminal display as an example of a single action of the user. While this describes a preferred mode of interaction, the scope of the present invention is not limited to the use of a mouse as the input device or to the click of a mouse button as the user's single action. Rather, any action by a user within a short period of time, whether comprising one or more clicks of a mouse button or other input device, is considered a single action of the user for the purposes of the present invention.

The system can be configured to allow for trading in a single or in multiple exchanges simultaneously. Connection of the system of the present invention with multiple exchanges is illustrated in Figure 1. This figure shows multiple host exchanges 101-103 connected through routers 104-106 to gateways 107-109. Multiple client terminals 110-116 for use as trading stations can then trade in the multiple exchanges through their connection to the gateways 107-109. When the system is configured to receive data from multiple exchanges, then the preferred implementation is to translate the data from various exchanges into a simple format. This "translation" function is described below with reference to Figure 1. An applications program interface ("TT API" as depicted in the figure) translates the incoming data formats from the different exchanges to a simple preferred data format. This translation function may be disposed anywhere in the network, for example, at the gateway server, at the individual workstations or at both. In addition, the storage at gateway servers and at the client workstations, and/or other external storage cache historical data such as order books which list the client's active orders in the market; that is, those orders that have neither been filled nor cancelled. Information from different exchanges can be displayed at one or in multiple windows at the client workstation. Accordingly, while reference is made through the remainder of the specification to a single exchange to which a trading terminal is connected, the scope of the invention includes the ability to trade, in accordance with the trading methods described herein, in multiple exchanges using a single trading terminal.

The preferred embodiments of the present invention include the display of "Market Depth" and allow traders to view the market depth of a commodity and to execute trades within the market depth with a single click of a computer mouse button. Market Depth represents the order book with the current bid and ask prices and quantities in the market. In other words, Market Depth is each bid and ask that was entered into the market, subject to the limits noted below, in addition to the inside market. For a commodity being traded, the "inside market" is the highest bid price and the lowest ask price.

The exchange sends the price, order and fill information to each trader on the exchange. The present invention processes this information and maps it through simple algorithms and mapping tables to positions in a theoretical grid program or any other comparable mapping technique for mapping data to a screen. The physical mapping of such information to a screen grid can be done by any technique known to those skilled in the art. The present invention is not limited by the method used to map the data to the screen display.

How far into the market depth the present invention can display depends on how much of the market depth the exchange provides. Some exchanges supply an infinite market depth, while others provide no market depth or only a few orders away from the inside market. The user of the present invention can also chose how far into the market depth to display on his screen.

Figure 2 illustrates a screen display of an invention described in a commonly owned co-pending application entitled "Click Based Trading with Market Depth Display" to which reference is made. This display shows the inside market and the market depth of a given commodity being traded. Row 1 represents the "inside market" for the commodity being traded which is the best (highest) bid price and quantity and the best (lowest) ask price and quantity. Rows 2-5 represent the "market depth" for the commodity being traded. In the preferred embodiment of the present invention, the display of market depth (rows 2-5) lists the available next-best bids, in column 203, and asks, in column 204. The working bid and ask quantity for each price level is also displayed in columns 202 and 205 respectively (inside market - row 1). Prices and quantities for the inside market and market depth update dynamically on a real time basis as such information is relayed from the market.

In the screen display shown in Figure 2, the commodity (contract) being traded is represented in row 1 by the character string "CDH0". The Depth column 208 will inform the trader of a status by displaying different colors. Yellow indicates that the program application is waiting for data. Red indicates that the Market Depth has failed to receive the data from the server and has "timed out." Green indicates that the data has just been updated. The other column headings in this and all of the other figures, are defmed as follows. *BidQty (Bid Quantity)*: the quantity for each working bid, *BidPrc (Bid Price*): the price for each working bid, *AskPrc (Ask Price*): the price for each working ask, *AskQty (Ask Quantity)*: the quantity for each working ask, *LastPrc (Last Price)*: the price for the last bid and ask that were matched in the market and *LastQty (Last Quantity)*: the quantity traded at the last price. *Total* represents the total quantity traded of the given commodity.

The configuration of the screen display itself informs the user in a more convenient and efficient manner than existing systems. Traders gain a significant advantage by seeing the market depth because they can see trends in the orders in the market. The market depth display shows the trader the interest the market has in a given commodity at different price levels. If a large amount of bids or asks are in the market near the trader's position, he may feel he should sell or buy before the inside market reaches the morass of orders. A lack of orders above or below the inside market might prompt a trader to enter orders near the inside market. Without seeing the market depth, no such strategies could be utilized. Having the dynamic market depth, including the bid and ask quantities and prices of a traded commodity aligned with and displayed below the current inside market of the commodity conveys the information to the user in a more intuitive and easily understandable manner. Trends in the trading of the commodity and other relevant characteristics are more easily identifiable by the user through the use of the present invention.

Various abbreviations are used in the screen displays, and specifically, in the column headings of the screen displays reproduced herein. Some abbreviations have been discussed above. A list of common abbreviations and their meanings is provided in Table 1.

**Table I** - Abbreviations

| COLUMN | DESCRIPTION | COLUMN | DESCRIPTION |
|---|---|---|---|
| Month | Expiration Month/Year | TheoBid | Theoretical Bid Price |
| Bid Mbr$_{(1)}$ | Bid Member ID | TheoAsk | Theoretical Ask Price |
| WrkBuys$_{(2)}$ | Working Buys for entire Group ID | QAct | Quote Action (Sends Individual quotes) |
| BidQty | Bid Quantity | BQQ | Test Bid Quote Quantity |
| ThrshBid$_{(6)}$ | Threshold Bid Price | BQP | Test Bid Quote Price |
| BidPrc | Bid Price | Mkt BQQ | Market Bid Quote Quantity |
| Bid Qty Accum | Accumulated Bid Quantity | Mkt BQP | Market Bid Quote Price |
| BidPrc Avg | Bid Price Average | Quote | Checkbox activates / deactivates contract for quoting |
| AskPrc Avg | Ask Price Average | Mkt AQQ | Market Ask Quote Quantity |
| AskQty Accum | Accumulated Ask Quantity | Mkt AQP | Market Ask Quote Price |
| AskPrc | Ask Price | AQP | Ask Quote Price |
| ThrshAsk$_{(6)}$ | Threshold Ask Price | AQQ | Ask Quote Quantity |
| AskQty | Ask Quantity | Imp BldQty$_{(5)}$ | Implied Bid Quantity |
| WrkSells$_{(2)}$ | Working Sells for entire Group ID | Imp BidPrc$_{(5)}$ | Implied Bid Price |
| Ask Mbr$_{(1)}$ | Ask Member ID | Imp AskQty$_{(5)}$ | Implied Ask Quantity |
| NetPos | Net Position | Imp AskPrc$_{(5)}$ | Implied Ask Price |
| FFNetPos | Fast Fill Net Position | Gamma$_{(3)}$ | Change in Delta given 1 pt change in underlying |
| LastPrc | Last Price | Delta$_{(3)}$ | Change in price given 1 pt change in underlying |
| LastQty | Last Quantity | Vola$_{(3)}$ | Percent volatility |
| Total | Total Traded Quantity | Vega$_{(3)}$ | Price change given 1% change in Vola |
| High | High Price | Rho$_{(3)}$ | Price change given 1% change in interest rate |

(continued)

| COLUMN | DESCRIPTION | COLUMN | DESCRIPTION |
|---|---|---|---|
| Low | Low Price | $Theta_{(3)}$ | Price change for every day that elapses |
| Open | Opening Price | Click Trd | Activate / deactivate click trading by contract |
| Close | Closing Price | S (Status) | Auction, Closed, FastMkt, Not Tradable, Pre-trading, Tradable. S = post-trading |
| Chng | Last Price-Last Close | Expiry | Expiration Month/Year |
| TheoPrc | Theoretical Price | | |

As described herein, the display and trading method of the present invention provide the user with certain advantages over systems in which a display of market depth, as shown in Figure 2, is used. The Mercury display and trading method of the present invention ensure fast and accurate execution of trades by displaying market depth on a vertical or horizontal plane, which fluctuates logically up or down, left or right across the plane as the market prices fluctuates. This allows the trader to trade quickly and efficiently. An example of such a Mercury display is illustrated in the screen display of Figure 3.

The display of market depth and the manner in which traders trade within the market depth can be effected in different manners, which many traders will find materially better, faster and more accurate. In addition, some traders may find the display of market depth to be difficult to follow. In the display shown in Figure 2, the market depth is displayed vertically so that both Bid and Ask prices descend the grid. The Bid prices descend the market grid as the prices decrease. Ask prices also descend the market grid as these prices actually increase. This combination may be considered counterintuitive and difficult to follow by some traders.

The Mercury display overcomes this problem in an innovative and logical manner. Mercury also provides an order entry system, market grid, fill window and summary of market orders in one simple window. Such a condensed display materially simplifies the trading system by entering and tracking trades in an extremely efficient manner. Mercury displays market depth in a logical, vertical fashion or horizontally or at some other convenient angle or configuration. A vertical field is shown in the figures and described for convenience, but the field could be horizontal or at an angle. In turn, Mercury further increases the speed of trading and the likelihood of entering orders at desired prices with desired quantities. In the preferred embodiment of the invention, the Mercury display is a static vertical column of prices with the bid and ask quantities displayed in vertical columns to the side of the price column and aligned with the corresponding bid and ask prices. An example of this display is shown in Figure 3.

Bid quantities are in the column 1003 labeled BidQ and ask quantities are in column 1004 labeled AskQ. The representative ticks from prices for the given commodity are shown in column 1005. The column does not list the whole prices (e.g. 95.89), but rather, just the last two digits (e.g. 89). In the example shown, the inside market, cells 1020, is 18 (best bid quantity) at 89 (best bid price) and 20 (best ask quantity) at 90 (best ask price). In the preferred embodiment of the invention, these three columns are shown in different colors so that the trader can quickly distinguish between them.

The values in the price column are static; that is, they do not normally change positions unless a re-centering command is received (discussed in detail later). The values in the Bid and Ask columns however, are dynamic; that is, they move up and down (in the vertical example) to reflect the market depth for the given commodity. The LTQ column 1006 shows the last traded quantity of the commodity. The relative position of the quantity value with respect to the Price values reflects the price at which that quantity was traded. Column 1001 labeled E/W (entered/working) displays the current status of the trader's orders. The status of each order is displayed in the price row where it was entered. For example, in cells 1007, the number next to S indicates the number of the trader's ordered lots that have been sold at the price in the specific row. The number next to W indicates the number of the trader's ordered lots that are in the market, but have not been filled-i.e. the system is working on filling the order. Blanks in this column indicate that no orders are entered or working at that price. In cells 1008, the number next to B indicates the number of the trader's ordered lots that have been bought at the price in the specific row. The number next to W indicates the number of the trader's ordered lots that are in the market, but have not been filled-i.e. the system is working on filling the order.

Various parameters are set and information is provided in column 1002. For example, "10:48:44" in cell 1009 shows the actual time of day. The L and R fields in cell 1010 indicate a quantity value, which may be added to the order quantity entered. This process is explained below with respect to trading under Mercury. Below the L and R fields, in cell 1011, a number appears which represents the current market volume. This is the number of lots that have been traded for the chosen contract. Cell 1012, "X 10", displays the Net Quantity, the current position of the trader on the chosen contract. The number "10" represents the trader's buys minus sells. Cell 1013 is the "Current Quantity"; this field represents the quantity for the next order that the trader will send to market. This can be adjusted with right and left clicks (up and down) or by clicking the buttons which appear below the Current Quantity in cells 1014. These buttons increase the current quantity by the indicated amount; for example, "10" will increase it by 10; "1H" will increase it by 100; "1K" will increase it by 1000. Cell 1015 is the Clear button; clicking this button will clear the Current Quantity field. Cell 1016 is the Quantity Description; this is a pull down menu allowing the trader to chose from three Quantity Descriptions. The pull down menu is displayed when the arrow button in the window is clicked. The window includes NetPos, Offset and a field allowing the trader to enter numbers. Placing a number in this field will set a default buy or sell quantity. Choosing "Offset" in this field will enable the L/R buttons of cell 1010. Choosing "NetPos" in this field will set the current Net Quantity (trader's net position) as the trader's quantity for his next trade. Cell 1017 are +/- buttons; these buttons will alter the size of the screen-either larger (+) or smaller (-). Cell 1018 is used to invoke Net 0; clicking this button will reset the Net Quantity (cell 1011) to zero. Cell 1019 is used to invoke Net Real; clicking this button will reset the Net Quantity (cell 1011) to its actual position.

The inside market and market depth ascend and descend as prices in the market increase and decrease. For example, Figure 4 shows a screen displaying the same market as that of Figure 3 but at a later interval where the inside market, cells 1101, has risen three ticks. Here, the inside market for the commodity is 43 (best bid quantity) at 92 (best bid price) and 63 (best ask quantity) at 93 (best ask price). In comparing Figures 3 and 4, it can be seen that the price column remained static, but the corresponding bids and asks rose up the price column. Market Depth similarly ascends and descends the price column, leaving a vertical history of the market.

As the market ascends or descends the price column, the inside market might go above or below the price column displayed on a trader's screen. Usually a trader will want to be able to see the inside market to assess future trades. The system of the present invention addresses this problem with a one click centering feature. With a single click at any point within the gray area, 1021, below the "Net Real" button, the system will re-center the inside market on the trader's screen. Also, when using a three-button mouse, a click of the middle mouse button, irrespective of the location of the mouse pointer, will re-center the inside market on the trader's screen.

The same information and features can be displayed and enabled in a horizontal fashion. Just as the market ascends and descends the vertical Mercury display shown in Figures 3 and 4, the market will move left and right in the horizontal Mercury display. The same data and the same information gleaned from the dynamical display of the data is provided. It is envisioned that other orientations can be used to dynamically display the data and such orientations are intended to come within the scope of the present invention.

Next, trading commodities, and specifically, the placement of trade orders using the Mercury display is described. Using the Mercury display and trading method, a trader would first designate the desired commodity and, if applicable, the default quantities. Then he can trade with single clicks of the right or left mouse button. The following equations are used by the system to generate trade orders and to determine the quantity and price to be associated with the trade order. The following abbreviations are used in these formulas: P = Price value of row clicked, R = Value in R field, L = Value in L field, Q = Current Quantity, $Q_a$ = Total of all quantities in AskQ column at an equal or better price than P, $Q_b$ = Total of all quantities in BidQ column at an equal or better price than P, N = Current Net Position, Bo = Buy order sent to market and So = Sell order sent to market.

Any order entered using right mouse button

$$Bo = (Q_a + R)P \quad (Eq. 1)$$

If BidQ field clicked.

$$So = (Q_b + R)P \quad (Eq. 2)$$

If AskQ field clicked.

Orders entered using the left mouse button

If "Offset" mode chosen in Quantity Description field then:

$$Bo = (Q_a + L)P \quad (Eq. 3)$$

If BidQ field clicked.

$$So = (Q_b + L)P \quad (Eq. 4)$$

If AskQ field clicked.

If "number" mode chosen in Quantity Description field then:

$$Bo = QP \quad (Eq. 5)$$

$$So = QP \quad (Eq. 6)$$

If "NetPos" mode chosen in Quantity Description field then:

$$Bo = NP \quad (Eq. 7)$$

$$So = NP \quad (Eq. 8)$$

Orders can also be sent to market for quantities that vary according to the quantities available in the market; quantities preset by the trader; and which mouse button the trader clicks. Using this feature, a trader can buy or sell all of the bids or asks in the market at or better than a chosen price with one click. The trader could also add or subtract a preset quantity from the quantities outstanding in the market. If the trader clicks in a trading cell-i.e. in the BidQ or AskQ column, he will enter an order in the market. The parameters of the order depend on which mouse button he clicks and what preset values he set.

Using the screen display and values from Figure 5, the placement of trade orders using the Mercury display and trading method is now described using examples. A left click on the 18 in the BidQ column 1201 will send an order to market to buy 17 lots (quantity # chosen on the Quantity Description pull down menu cell 1204) of the commodity at a price of 89 (the corresponding price in the Prc column 1203). Similarly, a left click on the 20 in the AskQ column 1202 will send an order to market to sell 17 lots at a price of 90.

Using the right mouse button, an order would be sent to market at the price that corresponds to the row clicked for the total quantity of orders in the market that equal or better the price in that row plus the quantity in the R field 1205. Thus, a right click in the AskQ column 1202 in the 87 price row will send a sell order to market at a price of 87 and a quantity of 150. 150 is the sum of all the quantities 30, 97, 18 and 5. 30, 97 and 18 are all of the quantities in the market that would meet or better the trader's sell order price of 87. These quantities are displayed in the BidQ column 1201 because this column represents the orders outstanding in the market to purchase the commodity at each corresponding price. The quantity 5 is the quantity pre-set in the R field 1205.

Similarly, a right click in the BidQ column 1201 at the same price level of 87 would send a buy limit order to market for a quantity of 5 at a price of 87. The quantity is determined in the same manner as above. In this example, though, there are no orders in the market that equal or better the chosen price - there are no quantities in the AskQ column 1202 that equal or better this price. Therefore, the sum of the equal or better quantities is zero ("0"). The total order entered by the trader will be the value in the R field, which is 5.

An order entered with the left mouse button and the "Offset" option chosen in the quantity description field 1204 will be calculated in the same way as above, but the quantity in the L field 1206 will be added instead of the quantity in the R field 1205. Thus, a left click in the BidQ column 1201 in the 92 price row will send a buy order to market at a price of 92 and a quantity of 96. 96 is the sum of all the quantities 45, 28, 20 and 3. 45, 28 and 20 are all quantities in the market that would meet or better the trader's buy order price of 92. These quantities are displayed in the AskQ column 1202 because this column represents the orders outstanding in the market to sell the commodity at each corresponding price. The quantity 3 is the quantity pre-set in the L field 1206.

The values in the L or R fields may be negative numbers. This would effectively decrease the total quantity sent to market. In other words, in the example of a right click in the AskQ column 1202 in the 87 price row, if the R field was -5, the total quantity sent to market would be 140 (30 + 97 + 18 + (-5)).

If a trader chose the "NetPos" option in the quantity description field 1204, a right click would still work as explained above. A left click would enter an order with a price corresponding to the price row clicked and a quantity equal to the current Net position of the trader. The Net position of the trader is the the trader's current position on the chosen contract. In other words, if the trader has bought 10 more contracts than he has sold, this value would be 10. NetPos would not affect the quantity of an order sent with a right click.

If the trader chose a number value in the quantity description, a left click would send an order to market for the current quantity chosen by the trader. The default value of the current quantity will be the number entered in the quantity description field, but it could be changed by adjusting the figure in the current quantity field 1204.

This embodiment of the invention also allows a trader to delete all of his working trades with a single click of either the right or left mouse button anywhere in the last traded quantity (LTQ) column 1207. This allows a trader to exit the market immediately. Traders will use this feature when they are losing money and want to stop the losses from pilling up. Traders may also use this feature to quickly exit the market upon making a desired profit. The invention also allows a trader to delete all of his orders from the market at a particular price level. A click with either mouse button in the Entered/Working (E/W) column 1208 will delete all working orders in the cell that was clicked. Thus, if a trader believes that previously sent orders at a particular price that have not been filled would be poor trades, he can delete these orders with a single click.

The process for placing trade orders using the Mercury display and trading method of the present invention as described above is shown in the flowchart of Figure 6. First, in step 1301, the trader has the Mercury display on the trading terminal screen showing the market for a given commodity. In step 1302, the parameters are set in the appropriate fields, such as the L and R fields and the Current Quantity, NetPos or Offset fields from the pull down menu. In step 1303, the mouse pointer is positioned and clicked over a cell in the Mercury display by the trader. In step 1304, the system determines whether the cell clicked is a tradeable cell (i.e. in the AskQ column or BidQ column). If not, then in step 1305, no trade order is created or sent and, rather, other quantities are adjusted or functions are performed based upon the cell selected. Otherwise, in step 1306, the system determines whether it was the left or the right button of the mouse that was clicked. If it was the right, then in step 1307, the system will use the quantity in the R field when it determines the total quantity of the order in step 1310. If the left button was clicked, then in step 1308, the system determines which quantity description was chosen: Offset, NetPos or an actual number.

If Offset was chosen, then the system, in step 1309, will use the quantity in the L field when it determines the total quantity of the order in step 1310. If NetPos was chosen, then the system, in step 1312, will determine that the total quantity for the trade order will be current NetPos value, i.e. the net position of the trader in the given commodity. If an actual number was used as the quantity description, then, in step 1311, the system will determine that the total quantity for the trade order will be the current quantity entered. In step 1310, the system will determine that the total quantity for the trade order will be the value of the R field (if step 1307 was taken) or the value of the L field (if step 1309 was taken) plus all quantities in the market for prices better than or equal to the price in the row clicked. This will add up the quantities for each order in the market that will fill the order being entered by the trader (plus the L or R value).

After either steps 1310, 1311 or 1312, the system, in step 1313, determines which column was clicked, BidQ or AskQ. If AskQ was clicked, then, in step 1314, the system sends a sell limit order to the market at the price corresponding to the row for the total quantity as already determined. If BidQ was clicked, then, in step 1315, the system sends a buy limit order to the market at the price corresponding to the row for the total quantity as already determined.

It should be understood that the above description of the invention and specific examples, while indicating preferred embodiments of the present invention, are given by way of illustration and not limitation. Many changes and modifications within the scope of the present invention may be made without departing from the spirit thereof, and the present invention includes all such changes and modifications.

## Claims

1. A device (110 - 116) for receiving a command relating to a commodity being traded in a market on an electronic exchange (101 - 103), the device comprising:

   an interface for receiving data relating to the commodity from the electronic exchange, the data comprising at least a last trade price available for the commodity;
   means for displaying a quantity associated with the last trade price at a location aligned with the last trade price along a field of prices;
   means for updating the display of the quantity associated with the last trade price, wherein in response to new data representing a different last trade price of the commodity received from the electronic exchange via the interface, the quantity associated with the last trade price is moved relative to the field of prices to a different location aligned with a different price level in the field of prices and reflects the new data;
means for displaying status information at a location aligned with a particular price level along the field of prices, the displayed status information being associated with an order entered at the electronic exchange at the particular price level;
means for receiving a command that selects the location associated with the displayed status information so as to cancel the order at the electronic exchange;
means for setting a trade order parameter comprising an order quantity; and
means for displaying a plurality of locations (1003, 1004: 1201, 1202), each location being associated with a bid side of the market or an ask side of the market and being aligned with a price level in the field of prices, and each location being selectable by a user input means, the device being configured such that selection of one of the plurality of locations sends an order message to the electronic exchange based on the trade order parameter and the price level that is aligned with the selected location.

**2.** The device of claim 1, further comprising:

means for displaying a plurality of areas (1006; 1207), each area being aligned with a price level along the field of prices, wherein the location for displaying the quantity associated with the last trade price is one of the plurality of areas.

**3.** The device of claim 1 or 2, wherein the interface for receiving data relating to the commodity further receives a current highest bid price and a current lowest ask price (1020,1101), the device further comprising:

means for displaying a first quantity at a first location aligned with a first price level in a field of prices (1005, 1203), the first quantity being associated with the current highest bid price for the commodity;
means for displaying a second quantity at a second location aligned with a second price level in the field of prices, the second quantity being associated with the current lowest ask price for the commodity; and
means for updating the display of the first and second quantities, wherein in response to new data representing a different highest bid price and/ or lowest ask price of the commodity received from the electronic exchange via the interface, at least one of the first and second quantities is moved relative to the field of prices to a different location aligned with a different price level in the field of prices.

**4.** The device of claim 1, 2 or 3, wherein the command comprises a single action command.

**5.** The device of claim 4, wherein the single action command consists of a single click of a user input means.

**6.** The device of claim 4, wherein the single action command comprises one or more clicks of a user input means within a short period of time.

**7.** The device of any one of the preceding claims, further comprising:

means for receiving a command to enter the order at the electronic exchange, the command resulting from selecting a particular location of the plurality of locations corresponding to a desired price level as part of a single action of a user with a pointer of the user input means positioned over the particular location to both set an order price parameter for the order based on the desired price level and send the order to the electronic exchange.

**8.** The device of any one of the preceding claims, wherein the trade order parameter is based at least in part on a preset order quantity.

**9.** The device of any one of the preceding claims, further comprising:

means for displaying a plurality of areas (1001; 1208), each area being aligned with a price level along the field of prices, wherein the location for displaying the status information is one of the plurality of areas.

**10.** The device of any one of the preceding claims, wherein the displayed status information indicates a current status of the order at the electronic exchange.

**11.** The device of claim 10, wherein the current status comprises a number of ordered lots of the commodity that have been bought or sold since the order was placed at the electronic exchange.

**12.** The device of any one of the preceding claims, wherein price levels along the field of prices are positioned vertically, horizontally, or at some other angle.

**13.** The device of any one of the preceding claims, wherein the field of prices comprises a field of static prices.

**14.** The device of any one of claims 3 to 13, further comprising:

means for receiving an instruction causing the price levels to change positions.

**15.** The device of claim 14, wherein the instruction comprises a re-centering command, wherein the device is responsive to the re-centering command to center the first quantity and the second quantity with respect to the field of prices.

**16.** The device of claim 15, wherein as a result of the first and second quantities moving away from the center portion of the price axis because of changes in an inside market comprising a highest bid price and a lowest ask price, the re-centering command positions the first and second quantities back in a center of the field of prices.

**17.** The device of claim 16, wherein the re-centering command is further based on receipt of a manual command from a user input means.

**18.** A method of operating a client device (110-116) for receiving a command relating to a commodity being traded in a market on an electronic exchange (101-103), the method comprising:

receiving data relating to the commodity from the electronic exchange, the data comprising at least a last trade price available for the commodity;
displaying a quantity associated with the last trade price at a location aligned with the last trade price along a field of prices;
updating the display of the quantity associated with the last trade price, wherein in response to new data representing a different last trade price of the commodity received from the electronic exchange via the interface, the quantity associated with the last trade price is moved relative to the field of prices to a different location aligned with a different price level in the field of prices and reflects the new data;
displaying status information at a location aligned with a particular price level along the field of prices, the displayed status information being associated with an order entered at the electronic exchange at the particular price level;
receiving a command that selects the location associated with the displayed status information so as to cancel the order at the electronic exchange;
setting a trade order parameter comprising an order quantity; and
displaying a plurality of locations (1003, 1004: 1201, 1202), each location being associated with a bid side of the market or an ask side of the market and being aligned with a price level in the field of prices and each location being selectable by a user input means, the device being configured such that selection of one of the plurality of locations sends an order message to the electronic exchange based on the trade order parameter and the price level that is aligned with the selected location.

**19.** The method of claim 18, wherein the quantity associated with the last trade price is displayed in an area of a plurality of areas (1006, 1207), each area being aligned with a price level along the field of prices.

**20.** The method of claim 18 or 19, wherein the data relating to the commodity received form the electronic exchange further comprises a current highest bid price and a current lowest ask price (1020, 1101), the method further comprising:

displaying a first quantity at a first location aligned with a first price level in a field of prices (1005, 1203), the first quantity being associated with the current highest bid price for the commodity;
displaying a second quantity at a second location aligned with a second price level in the field of prices, the second quantity being associated with the current lowest ask price for the commodity; and
updating the display of the first and second quantities, wherein in response to new data representing a different highest bid price and/ or lowest ask price of the commodity received from electronic exchange via the interface, at least one of the first and second quantities is moved relative to the field of prices to a different location aligned with a different price level in the field of prices.

**21.** The method of any one of claims 18 to 20, wherein the command comprises a single action command.

**22.** The method of claim 21, wherein the single action command consists of a single click of a user input means.

**23.** The method of claim 21, wherein the single action command comprises one or more clicks of a user input means within a short period of time.

**24.** The method of any one of claims 20 to 23, further comprising:

receiving a command to enter the order at the electronic exchange, the command resulting from selecting a particular location of the plurality of locations corresponding to a desired price level as part of a single action of a user with a pointer of the user input means positioned over the particular location to both set an order price parameter of the order based on the desired price level and send the order to the electronic exchange.

**25.** The method of any one of claims 18 to 24, wherein the trade order parameter is based at least in part on a preset order quantity.

**26.** The method of any one of claims 18 to 25, further comprising:

displaying a plurality of areas (1001; 1208), each area being aligned with a price level along the field of prices, wherein the location for displaying the status information is one of the plurality of areas.

**27.** The method of any one of claims 18 to 26, wherein the displayed status information displays a current status of the order at the electronic exchange.

**28.** The method of claim 27, wherein the current status comprises a number of ordered lots of the commodity that have been brought or sold since the order was placed at the electronic exchange.

**29.** The method of any one of claims 18 to 28, wherein the field of prices comprise a field of static prices.

**30.** The method of any one of claims 20 to 29, further comprising:

receiving an instruction causing the price levels to change positions.

**31.** The method of claim 30, wherein the instruction comprises a re-centering command, wherein the method comprises centering the first quantity and the second quantity with respect to the field of prices in response to the re-centering command.

**32.** The method of claim 31, wherein as a result of a first and second quantities corresponding to a current highest bid price and a current lowest ask price available for the commodity moving away from the center portion of the price axis because of the changes in an inside market, the re-centering command positions the first and second quantities back in a center of the field of prices.

**33.** The method of claim 31, wherein the re-centering command is further based on receipt of a manual command from a user input means.

**34.** The method of any one of claims 18 to 33, wherein price levels along the field of prices are positioned vertically, horizontally, or at some other angle.

**35.** A computer program product having program code recorded thereon for execution on a computer for receiving commands relating to a commodity to be traded on an electronic exchange, adapted for execution of the steps of any one of claims 18 to 34.

## Patentansprüche

1. Vorrichtung (110 - 116) zum Empfangen eines Befehls bezüglich einer Ware, die in einem Markt an einer elektronischen Börse (101 - 103) gehandelt wird, wobei die Vorrichtung Folgendes umfasst:

   eine Schnittstelle zum Empfangen von Daten bezüglich der Ware von der elektronischen Börse, wobei die Daten mindestens einen letzten Handelspreis umfassen, der für die Ware verfügbar ist;
   Mittel zum Anzeigen einer mit dem letzten Handelspreis verbundenen Menge, an einem Ort, ausgerichtet an dem letzten Handelspreis in einem Preisbereich;
   Mittel zum Aktualisieren der Anzeige der mit dem letzten Handelspreis verbundenen Menge, wobei - als Reaktion auf neue Daten, die einen anderen letzten Handelspreis der Ware repräsentieren, empfangen von der elektronischen Börse über die Schnittstelle, - die dem letzten Handelspreis zugeordnete Menge relativ zu dem Preisbereich bewegt wird, an einen anderen Ort, ausgerichtet an einem anderen Preisniveau in dem Preisbereich, und die neuen Daten widerspiegelt;
   Mittel zum Anzeigen von Statusinformationen an einem Ort, ausgerichtet an einem bestimmten Preisniveau in dem Preisbereich, wobei die angezeigte Statusinformation mit einer Order verbunden ist, die an der elektronischen Börse bei dem bestimmten Preisniveau eingegeben wurde;
   Mittel zum Empfangen eines Befehls, der den mit der angezeigten Statusinformation verbundenen Ort auswählt, um die Order an der elektronischen Börse aufzuheben;
   Mittel zum Einrichten eines Handelsauftragsparameters, eine Order-Menge umfassend; und
   Mittel zum Anzeigen von einer Mehrzahl von Orten (1003, 1004: 1201, 1202), wobei jeder Ort mit einer Geldseite des Marktes oder einer Briefseite des Marktes verbunden ist und ausgerichtet ist an einem Preisniveau in dem Preisbereich, und wobei jeder Ort durch eine Benutzereingabeeinrichtung auswählbar ist, wobei die Vorrichtung so konfiguriert ist, dass die Auswahl von einem von der Mehrzahl von Orten eine Order-Nachricht an die elektronische Börse sendet, basierend auf dem Handelsauftragsparameter und dem Preisniveau, das an dem ausgewählten Ort ausgerichtet ist.

2. Vorrichtung nach Anspruch 1, ferner umfassend:

   Mittel zum Anzeigen einer Mehrzahl von Bereichen (1006; 1207), wobei jeder Bereich an einem Preisniveau in einem Preisbereich ausgerichtet ist, wobei der Ort zum Anzeigen der Menge, verbunden mit dem letzten Handelspreis, einen der Mehrzahl von Bereichen darstellt.

3. Vorrichtung nach Anspruch 1 oder 2, wobei die Schnittstelle zum Empfangen von Daten, die sich auf die Ware beziehen, ferner einen aktuellen höchsten Geldkurs und einen aktuellen niedrigsten Briefkurs (1020,1101) empfängt, wobei die Vorrichtung ferner Folgendes umfasst:

   Mittel zum Anzeigen einer ersten Menge an einem ersten Ort, ausgerichtet an einem ersten Preisniveau in einem Preisbereich (1005, 1203), wobei die erste Menge mit dem aktuellen höchsten Geldkurs für die Ware verbunden ist;
   Mittel zum Anzeigen einer zweiten Menge an einem zweiten Ort, ausgerichtet an einem zweiten Preisniveau in einem Preisbereich, wobei die zweite Menge mit dem aktuellen niedrigsten Briefkurs für die Ware verbunden ist; und
   Mittel zum Aktualisieren der Anzeige der ersten und zweiten Mengen, wobei als Reaktion auf neue Daten, die einen unterschiedlichen höchsten Geldkurs und / oder niedrigsten Briefkurs der Ware darstellen, empfangen von der elektronischen Börse über die Schnittstelle, mindestens eine der ersten und zweiten Mengen relativ zu dem Preisbereich an einen anderen Ort verschoben wird, der an einem anderen Preisniveau in dem Preisbereich ausgerichtet ist.

4. Vorrichtung nach Anspruch 1, 2 oder 3, wobei der Befehl einen Einzelaktionsbefehl umfasst.

5. Vorrichtung nach Anspruch 4, wobei der Einzelaktionsbefehl aus einem einzelnen Klick einer Benutzereingabeeinrichtung besteht.

6. Vorrichtung nach Anspruch 4, wobei der Einzelaktionsbefehl einen oder mehrere Klicks einer Benutzereingabeeinrichtung innerhalb einer kurzen Zeitspanne umfasst.

7. Vorrichtung nach einem der vorangehenden Ansprüche, ferner umfassend:

Mitteln zum Empfangen eines Befehls zum Eingeben der Order an der elektronischen Börse, wobei der Befehl aus der Auswahl eines bestimmten Ortes von der Mehrzahl von Orten resultiert, die einem gewünschten Preisniveau entsprechen, als Teil einer Einzelaktion eines Benutzers mit einem Zeiger der Benutzereingabeeinrichtung, positioniert über dem bestimmten Ort, um ein Order-Preisparameter für die Order auf der Grundlage des gewünschten Preisniveaus festzulegen und auch um die Order an die elektronische Börse zu senden.

**8.** Vorrichtung nach einem der vorhergehenden Ansprüche, wobei der Handelsauftragsparameter zumindest teilweise auf einer vorgegebenen Order-Menge basiert.

**9.** Vorrichtung nach einem der vorhergehenden Ansprüche, ferner umfassend:

Mittel zum Anzeigen einer Mehrzahl von Bereichen (1001; 1208), wobei jeder Bereich an einem Preisniveau in einem Preisbereich ausgerichtet ist, wobei der Ort zum Anzeigen der Statusinformation einen der Mehrzahl von Bereichen darstellt.

**10.** Vorrichtung nach einem der vorhergehenden Ansprüche, wobei die angezeigte Statusinformation einen aktuellen Status der Order an der elektronischen Börse anzeigt.

**11.** Vorrichtung nach Anspruch 10, wobei der aktuelle Status eine Anzahl von bestellten Partien der Ware umfasst, die gekauft oder verkauft wurden, seit die Order an der elektronischen Börse platziert wurde.

**12.** Vorrichtung nach einem der vorhergehenden Ansprüche, wobei die Preisniveaus in dem Preisbereich vertikal, horizontal oder in einem anderen Winkel positioniert sind.

**13.** Vorrichtung nach einem der vorhergehenden Ansprüche, wobei der Preisbereich einen Bereich von statischen Preisen umfasst.

**14.** Vorrichtung nach einem der Ansprüche 3 bis 13, ferner umfassend:

Mittel zum Empfangen eines Befehls, der bewirkt, dass die Preisniveaus die Positionen ändern.

**15.** Vorrichtung nach Anspruch 14, wobei der Befehl einen Neuzentrierungsbefehl umfasst, wobei die Vorrichtung auf den Neuzentrierungsbefehl anspricht, um die erste Menge und die zweite Menge in Bezug auf den Preisbereich zu zentrieren.

**16.** Vorrichtung nach Anspruch 15, wobei - als ein Ergebnis der ersten und zweiten Mengen, die sich von dem mittleren Teil der Preisachse weg bewegen, aufgrund von Änderungen in einem Handelsmarkt, einen höchsten Geldkurs und einen niedrigsten Briefkurs umfassend -, der Neuzentrierungsbefehl die ersten und zweiten Mengen zurück in eine Mitte des Preisbereiches positioniert.

**17.** Vorrichtung nach Anspruch 16, wobei der Neuzentrierungsbefehl ferner auf dem Empfang eines manuellen Befehls von einer Benutzereingabeeinrichtung basiert.

**18.** Verfahren zum Betreiben einer Client-Vorrichtung (110-116) zum Empfangen eines Befehls bezüglich einer Ware, die in einem Markt an einer elektronischen Börse (101- 103) gehandelt wird, wobei das Verfahren Folgendes umfasst:

das Empfangen von Daten bezüglich einer Ware von der elektronischen Börse, wobei die Daten mindestens einen letzten Handelspreis umfassen, der für die Ware verfügbar ist;
das Anzeigen einer mit dem letzten Handelspreis verbundenen Menge, an einem Ort, ausgerichtet an dem letzten Handelspreis in einem Preisbereich;
das Aktualisieren der Anzeige der mit dem letzten Handelspreis verbundenen Menge, wobei - als Reaktion auf neue Daten, die einen anderen letzten Handelspreis der Ware repräsentieren, empfangen von der elektronischen Börse über die Schnittstelle -, die dem letzten Handelspreis zugeordnete Menge relativ zu dem Preisbereich bewegt wird, an einen anderen Ort, ausgerichtet an einem anderen Preisniveau in dem Preisbereich, und die neuen Daten widerspiegelt;
das Anzeigen von Statusinformationen an einem Ort, ausgerichtet an einem bestimmten Preisniveau in dem Preisbereich, wobei die angezeigte Statusinformation mit einer Order verbunden ist, die an der elektronischen Börse bei dem bestimmten Preisniveau eingegeben wurde;

das Empfangen eines Befehls, der den mit der angezeigten Statusinformation verbundenen Ort auswählt, um die Order an der elektronischen Börse aufzuheben;
das Einrichten eines Handelsauftragsparameters, eine Order-Menge umfassend; und
das Anzeigen einer Mehrzahl von Orten (1003, 1004: 1201, 1202), wobei jeder Ort mit einer Geldseite des Marktes oder einer Briefseite des Marktes verbunden ist und an einem Preisniveau in dem Preisbereich ausgerichtet ist, und wobei jeder Ort durch eine Benutzereingabeeinrichtung auswählbar ist, wobei die Vorrichtung so konfiguriert ist, dass die Auswahl von einem von der Mehrzahl von Orten eine Order-Nachricht an die elektronische Börse sendet, basierend auf dem Handelsauftragsparameter und dem Preisniveau, das an dem ausgewählten Ort ausgerichtet ist.

**19.** Verfahren nach Anspruch 18, wobei die dem letzten Handelspreis zugeordnete Menge in einem Bereich von einer Mehrzahl von Bereichen (1006, 1207) angezeigt wird, wobei jeder Bereich an einem Preisniveau in einem Preisbereich ausgerichtet ist.

**20.** Verfahren nach Anspruch 18 oder 19, wobei die Daten bezüglich der Ware, bezogen von der elektronischen Börse, ferner einen aktuellen höchsten Geldkurs und einen aktuellen niedrigsten Briefkurs (1020, 1101) umfassen, wobei das Verfahren ferner Folgendes umfasst:

das Anzeigen einer ersten Menge an einem ersten Ort, der an einem ersten Preisniveau in einem Preisbereich (1005, 1203) ausgerichtet ist, wobei die erste Menge mit dem aktuellen höchsten Geldkurs für die Ware verbunden ist;
das Anzeigen einer zweiten Menge an einem zweiten Ort, der an einem zweiten Preisniveau in einem Preisbereich ausgerichtet ist, wobei die zweite Menge mit dem aktuellen niedrigsten Briefkurs für die Ware verbunden ist; und
das Aktualisieren der Anzeige der ersten und zweiten Mengen, wobei als Reaktion auf neue Daten, die einen unterschiedlichen höchsten Geldkurs und / oder niedrigsten Briefkurs der Ware darstellen, empfangen von der elektronischen Börse über die Schnittstelle, mindestens eine der ersten und zweiten Mengen relativ zu dem Preisbereich an einen anderen Ort verschoben wird, der an einem anderen Preisniveau in dem Preisbereich ausgerichtet ist.

**21.** Verfahren nach einem der Ansprüche 18 bis 20, wobei der Befehl einen Einzelaktionsbefehl umfasst.

**22.** Verfahren nach Anspruch 21, wobei der Einzelaktionsbefehl aus einem einzigen Klick einer Benutzereingabeeinrichtung besteht.

**23.** Verfahren nach Anspruch 21, wobei der Einzelaktionsbefehl einen oder mehrere Klicks einer Benutzereingabeeinrichtung innerhalb einer kurzen Zeitspanne umfasst.

**24.** Verfahren nach einem der Ansprüche 20 bis 23, ferner umfassend:

das Empfangen eines Befehls zum Eingeben der Order an der elektronischen Börse, wobei der Befehl aus der Auswahl eines bestimmten Ortes der Mehrzahl von Orten resultiert, die einem gewünschten Preisniveau entsprechen, als Teil einer Einzelaktion eines Benutzers mit einem Zeiger der Benutzereingabeeinrichtung, positioniert über dem bestimmten Ort, um ein Order-Preisparameter für die Order auf der Grundlage des gewünschten Preisniveaus festzulegen und auch um die Order an die elektronische Börse zu senden.

**25.** Verfahren nach einem der Ansprüche 18 bis 24, wobei der Handelsauftragsparameter zumindest teilweise auf einer vorgegebenen Order-Menge basiert.

**26.** Verfahren nach einem der Ansprüche 18 bis 25, ferner umfassend:

das Anzeigen einer Mehrzahl von Bereichen (1001; 1208), wobei jeder Bereich an einem Preisniveau in dem Preisbereich ausgerichtet ist, wobei der Ort zum Anzeigen der Statusinformation einen der Mehrzahl von Bereichen darstellt.

**27.** Verfahren nach einem der Ansprüche 18 bis 26, wobei die angezeigte Statusinformation einen aktuellen Status der Order an der elektronischen Börse anzeigt.

**28.** Verfahren nach Anspruch 27, wobei der aktuelle Status eine Anzahl von bestellten Partien der Ware umfasst, die gekauft oder verkauft wurden, seit die Order an der elektronischen Börse platziert wurde.

**29.** Verfahren nach einem der Ansprüche 18 bis 28, wobei der Preisbereich einen Bereich von statischen Preisen umfasst.

**30.** Verfahren nach einem der Ansprüche 20 bis 29, ferner umfassend:

das Empfangen eines Befehls, der bewirkt, dass die Preisniveaus die Positionen ändern.

**31.** Verfahren nach Anspruch 30, wobei der Befehl einen Neuzentrierungsbefehl umfasst, wobei das Verfahren das Zentrieren der ersten Menge und der zweiten Menge in Bezug auf den Preisbereich umfasst, als Reaktion auf den Neuzentrierungsbefehl.

**32.** Verfahren nach Anspruch 31, wobei - als ein Ergebnis einer ersten und einer zweiten Menge, die einem aktuellen höchsten Geldkurs und einen aktuellen niedrigsten Briefkurs entsprechen, der für die Ware erhältlich ist, die sich von dem mittleren Teil der Preisachse weg bewegen, aufgrund von Änderungen in einem Handelsmarkt - der Neuzentrierungsbefehl die ersten und zweiten Mengen zurück in eine Mitte des Preisbereiches positioniert.

**33.** Verfahren nach Anspruch 31, wobei der Neuzentrierungsbefehl ferner auf dem Empfang eines manuellen Befehls von einer Benutzereingabeeinrichtung basiert.

**34.** Verfahren nach einem der Ansprüche 18 bis 33, wobei die Preisniveaus in dem Preisbereich vertikal, horizontal oder in einem anderen Winkel positioniert sind.

**35.** Computerprogramm-Produkt mit einem auf diesem aufgezeichneten Programmcode zum Ausführen auf einem Computer, zum Empfangen von Befehlen, die sich auf eine Ware beziehen, die an einer elektronischen Börse gehandelt werden soll, geeignet zum Ausführen der Schritte nach einem der Ansprüche 18 bis 34.

**Revendications**

**1.** Dispositif (110-116) pour recevoir une commande relative à une marchandise qui est négociée dans un marché sur un central électronique (101-103), le dispositif comprenant :

une interface pour recevoir des données relatives à la marchandise à partir du central électronique, les données comprenant au moins un dernier prix de négociation disponible pour la marchandise ;
des moyens pour afficher une quantité associée au dernier prix de négociation à un emplacement aligné avec le dernier prix de négociation le long d'un champ de prix ;
des moyens pour mettre à jour l'affichage de la quantité associée au dernier prix de négociation, dans lequel en réponse à de nouvelles données représentant un dernier prix de négociation différent de la marchandise, reçu à partir du central électronique par le biais de l'interface, la quantité associée au dernier prix de négociation est déplacée par rapport au champ de prix dans un emplacement différent aligné avec un niveau de prix différent dans le champ de prix et reflète les nouvelles données ;
des moyens pour afficher des informations d'état à un emplacement aligné avec un niveau de prix particulier le long du champ de prix, les informations d'état affichées étant associées à un ordre saisi au niveau du central électronique au niveau de prix particulier ;
des moyens pour recevoir une commande qui sélectionne l'emplacement associé aux informations d'état affichées de manière à annuler l'ordre au niveau du central électronique ;
des moyens pour régler un paramètre d'ordre de négociation comprenant une quantité d'ordre ; et
des moyens pour afficher une pluralité d'emplacements (1003, 1004 ; 1201, 1202), chaque emplacement étant associé à un côté offre du marché ou un côté demande du marché et étant aligné avec un niveau de prix dans le champ de prix et chaque emplacement pouvant être sélectionné par un moyen d'entrée d'utilisateur, le dispositif étant configuré de manière qu'une sélection d'un de la pluralité d'emplacements envoie un message d'ordre au central électronique sur la base du paramètre d'ordre de négociation et du niveau de prix qui est aligné avec l'emplacement sélectionné.

**2.** Dispositif selon la revendication 1, comprenant en outre :

des moyens pour afficher une pluralité de zones (1006 ; 1207), chaque zone étant alignée avec un niveau de prix le long du champ de prix, dans lequel l'emplacement pour afficher la quantité associée au dernier prix de négociation est l'une de la pluralité de zones.

**3.** Dispositif selon la revendication 1 ou 2, dans lequel l'interface pour recevoir des données relatives à la marchandise reçoit en outre un plus haut prix d'offre actuel et un plus bas prix de demande actuel (1020, 1101), le dispositif comprenant en outre :

des moyens pour afficher une première quantité dans un premier emplacement aligné avec un premier niveau de prix dans un champ de prix (1005, 1203), la première quantité étant associée au plus haut prix d'offre actuel pour la marchandise ;
des moyens pour afficher une deuxième quantité dans un deuxième emplacement aligné avec un deuxième niveau de prix dans un champ de prix, la deuxième quantité étant associée au plus bas prix de demande actuel pour la marchandise ; et
des moyens pour mettre à jour l'affichage des première et deuxième quantités, dans lequel en réponse à de nouvelles données représentant un plus haut prix d'offre différent et/ou un plus bas prix de demande différent de la marchandise, reçu à partir du central électronique par le biais de l'interface, au moins une des première et deuxième quantités est déplacée par rapport au champ des prix dans un emplacement différent aligné avec un niveau de prix différent dans le champ de prix.

**4.** Dispositif selon la revendication 1, 2 ou 3, dans lequel la commande comprend une unique commande d'action.

**5.** Dispositif selon la revendication 4, dans lequel l'unique commande d'action consiste en un simple clic d'un moyen d'entrée d'utilisateur.

**6.** Dispositif selon la revendication 4, dans lequel l'unique commande d'action comprend un ou plusieurs clics d'un moyen d'entrée d'utilisateur dans une courte période de temps.

**7.** Dispositif selon l'une quelconque des revendications précédentes, comprenant en outre :

des moyens pour recevoir une commande pour saisir l'ordre au niveau du central électronique, la commande résultant de la sélection d'un emplacement particulier de la pluralité d'emplacements correspondant à un niveau de prix désiré comme une partie d'une unique action d'un utilisateur avec un pointeur du moyen d'entrée d'utilisateur positionné sur l'emplacement particulier pour à la fois régler un paramètre de prix d'ordre pour l'ordre sur la base du niveau de prix désiré et envoyer l'ordre au central électronique.

**8.** Dispositif selon l'une quelconque des revendications précédentes, dans lequel le paramètre d'ordre de négociation est basé au moins en partie sur une quantité d'ordre prédéfinie.

**9.** Dispositif selon l'une quelconque des revendications précédentes, comprenant en outre :

des moyens pour afficher une pluralité de zones (1001 ; 1208), chaque zone étant alignée avec un niveau de prix le long du champ de prix, dans lequel l'emplacement pour afficher les informations d'état est l'une de la pluralité de zones.

**10.** Dispositif selon l'une quelconque des revendications précédentes, dans lequel les informations d'état affichées indiquent un état actuel de l'ordre au niveau du central électronique.

**11.** Dispositif selon la revendication 10, dans lequel l'état actuel comprend un nombre de lots ordonnés de la marchandise qui ont été achetés et vendus depuis que l'ordre a été passé au niveau du central électronique.

**12.** Dispositif selon l'une quelconque des revendications précédentes, dans lequel des niveaux de prix le long du champ de prix sont positionnés verticalement, horizontalement ou à un certain autre angle.

**13.** Dispositif selon l'une quelconque des revendications précédentes, dans lequel le champ de prix comprend un champ de prix statiques.

**14.** Dispositif selon l'une quelconque des revendications 3 à 13, comprenant en outre :

des moyens pour recevoir une instruction amenant les niveaux de prix à changer de positions.

**15.** Dispositif selon la revendication 14, dans lequel l'instruction comprend une commande de recentrage, dans lequel le dispositif est réceptif à la commande de recentrage pour centrer la première quantité et la deuxième quantité par rapport au champ de prix.

**16.** Dispositif selon la revendication 15, dans lequel, suite au fait que les première et deuxième quantités s'écartent de la portion centrale de l'axe des prix à cause de changements dans un marché intérieur comprenant un plus haut prix d'offre et un plus bas prix de demande, la commande de recentrage repositionne les première et deuxième quantités à un centre du champ de prix.

**17.** Dispositif selon la revendication 16, dans lequel la commande de recentrage est basée en outre sur une réception d'une commande manuelle provenant d'un moyen d'entrée d'utilisateur.

**18.** Procédé de fonctionnement d'un dispositif client (110-116) pour recevoir une commande relative à une marchandise qui est négociée dans un marché sur un central électronique (101-103), le procédé comprenant :

la réception de données relatives à la marchandise à partir du central électronique, les données comprenant au moins un dernier prix de négociation disponible pour la marchandise ;
l'affichage d'une quantité associée au dernier prix de négociation à un emplacement aligné avec le dernier prix de négociation le long d'un champ de prix ;
la mise à jour de l'affichage de la quantité associée au dernier prix de négociation, dans lequel en réponse à de nouvelles données représentant un dernier prix de négociation différent de la marchandise, reçu à partir du central électronique par le biais de l'interface, la quantité associée au dernier prix de négociation est déplacée par rapport au champ de prix dans un emplacement différent aligné avec un niveau de prix différent dans le champ de prix et reflète les nouvelles données ;
l'affichage d'informations d'état à un emplacement aligné avec un niveau de prix particulier le long du champ de prix, les informations d'état affichées étant associées à un ordre saisi au niveau du central électronique au niveau de prix particulier ;
la réception d'une commande qui sélectionne l'emplacement associé aux informations d'état affichées de manière à annuler l'ordre au niveau du central électronique ;
le réglage d'un paramètre d'ordre de négociation comprenant une quantité d'ordre ; et
l'affichage d'une pluralité d'emplacements (1003, 1004 ; 1201, 1202), chaque emplacement étant associé à un côté offre du marché ou un côté demande du marché et étant aligné avec un niveau de prix dans le champ de prix et chaque emplacement pouvant être sélectionné par un moyen d'entrée d'utilisateur, le dispositif étant configuré de manière qu'une sélection d'un de la pluralité d'emplacements envoie un message d'ordre au central électronique sur la base du paramètre d'ordre de négociation et du niveau de prix qui est aligné avec l'emplacement sélectionné.

**19.** Procédé selon la revendication 18, dans lequel la quantité associée au dernier prix de négociation est affichée dans une zone de la pluralité de zones (1006, 1207), chaque zone étant alignée avec un niveau de prix le long du champ de prix.

**20.** Procédé selon la revendication 18 ou 19, dans lequel les données relatives à la marchandise reçues à partir du central électronique comprennent en outre un plus haut prix d'offre actuel et un plus bas prix de demande actuel (1020, 1101), le procédé comprenant en outre :

l'affichage d'une première quantité à un premier emplacement aligné avec un premier niveau de prix dans un champ de prix (1005, 1203), la première quantité étant associée au plus haut prix d'offre actuel pour la marchandise ;
l'affichage d'une deuxième quantité à un deuxième emplacement aligné avec un deuxième niveau de prix dans le champ de prix, la deuxième quantité étant associée au plus bas prix de demande actuel pour la marchandise ; et
la mise à jour de l'affichage des première et deuxième quantités, dans lequel en réponse à de nouvelles données représentant un plus haut prix d'offre différent et/ou un plus bas prix de demande différent de la marchandise, reçu à partir du central électronique par le biais de l'interface, au moins une des première et deuxième quantités est déplacée par rapport au champ de prix dans un emplacement différent aligné avec un niveau de prix différent dans le champ de prix.

21. Procédé selon l'une quelconque des revendications 18 à 20, dans lequel la commande comprend une unique commande d'action.

22. Procédé selon la revendication 21, dans lequel l'unique commande d'action consiste en un unique clic d'un moyen d'entrée d'utilisateur.

23. Procédé selon la revendication 21, dans lequel l'unique commande d'action comprend un ou plusieurs clics d'un moyen d'entrée d'utilisateur dans une courte période de temps.

24. Procédé selon l'une quelconque des revendications 20 à 23, comprenant en outre :

la réception d'une commande pour saisir l'ordre au niveau du central électronique, la commande résultant de la sélection d'un emplacement particulier de la pluralité d'emplacements correspondant à un niveau de prix désiré comme une partie d'une unique action d'un utilisateur avec un pointeur du moyen d'entrée d'utilisateur positionné sur l'emplacement particulier pour à la fois régler un paramètre de prix d'ordre de l'ordre sur la base du niveau de prix désiré et envoyer l'ordre au central électronique.

25. Procédé selon l'une quelconque des revendications 18 à 24, dans lequel le paramètre d'ordre de négociation est basé au moins en partie sur une quantité d'ordre prédéfinie.

26. Procédé selon l'une quelconque des revendications 18 à 25, comprenant en outre :

l'affichage d'une pluralité de zones (1001 ; 1208), chaque zone étant alignée avec un niveau de prix le long du champ de prix, dans lequel l'emplacement pour afficher les informations d'état est l'une de la pluralité de zones.

27. Procédé selon l'une quelconque des revendications 18 à 26, dans lequel les informations d'état affichées indiquent un état actuel de l'ordre au niveau du central électronique.

28. Procédé selon la revendication 27, dans lequel l'état actuel comprend un nombre de lots ordonnés de la marchandise qui ont été achetés ou vendu depuis que l'ordre a été passé au niveau du central électronique.

29. Procédé selon l'une quelconque des revendications 18 à 28, dans lequel le champ de prix comprend un champ de prix statiques.

30. Procédé selon l'une quelconque des revendications 20 à 29, comprenant en outre :

la réception d'une instruction amenant les niveaux de prix à changer de positions.

31. Procédé selon la revendication 30, dans lequel l'instruction comprend une commande de recentrage, dans lequel le procédé comprend le centrage de la première quantité et de la deuxième quantité par rapport au champ de prix en réponse à la commande de recentrage.

32. Procédé selon la revendication 31, dans lequel, suite au fait que des première et deuxième quantités correspondant à un plus haut prix d'offre et un plus bas prix de demande disponibles pour la marchandise s'écartent de la portion centrale de l'axe des prix à cause des changements dans un marché intérieur, la commande de recentrage repositionne les première et deuxième quantités à un centre du champ de prix.

33. Procédé selon la revendication 31, dans lequel la commande de recentrage est basée en outre sur une réception d'une commande manuelle provenant d'un moyen d'entrée d'utilisateur.

34. Procédé selon l'une quelconque des revendications 18 à 33, dans lequel des niveaux de prix le long du champ de prix sont positionnés verticalement, horizontalement ou à un certain autre angle.

35. Produit de programme informatique ayant un code de programme enregistré sur celui-ci pour l'exécution sur un ordinateur pour recevoir des commandes relatives à une marchandise destinée à être négociée sur un central électronique, adapté pour l'exécution des étapes de l'une quelconque des revendications 18 à 34.

FIG. 1

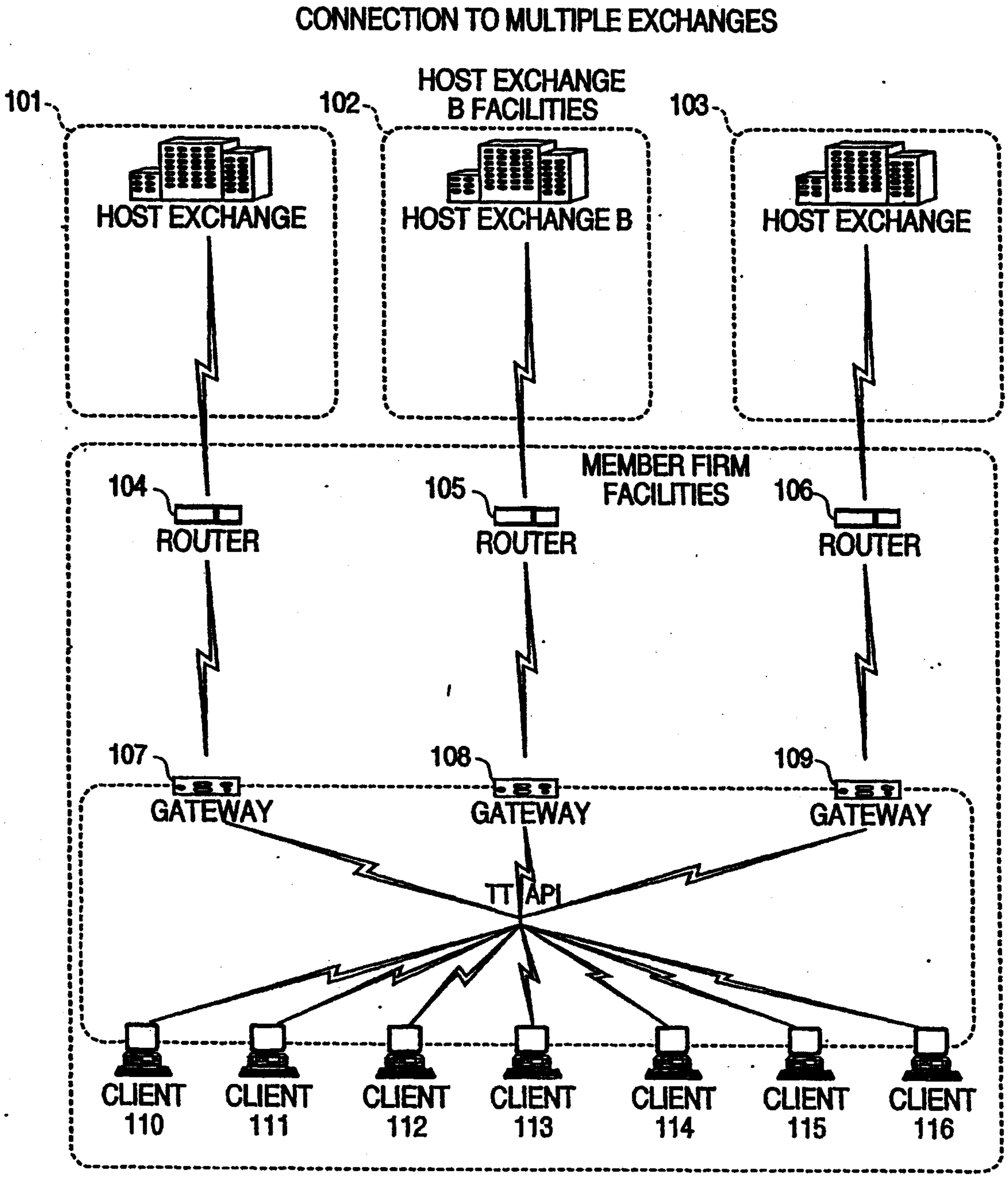
CONNECTION TO MULTIPLE EXCHANGES
HOST EXCHANGE
B FACILITIES
101
102
103
HOST EXCHANGE
HOST EXCHANGE B
HOST EXCHANGE
MEMBER FIRM
FACILITIES
104
105
106
ROUTER
ROUTER
ROUTER
107
108
109
GATEWAY
GATEWAY
GATEWAY
TT API
CLIENT 110
CLIENT 111
CLIENT 112
CLIENT 113
CLIENT 114
CLIENT 115
CLIENT 116

FIG. 2

201 202 203 204 205

| | Contract | Depth | BidQty | BidPrc | AskPrc | AskQty | LastPrc | LastQty | Total |
|---|---|---|---|---|---|---|---|---|---|
| 1 | CDHO | • | 785 | 7626 | 7627 | 21 | 7627 | 489 | 8230 |
| 2 | | | 626 | 7625 | 7629 | 815 | | | |
| 3 | | | 500 | 7624 | 7630 | 600 | | | |
| 4 | | | 500 | 7623 | 7631 | 2456 | | | |
| 5 | | | 200 | 7622 | 7632 | 800 | | | |

FIG. 3

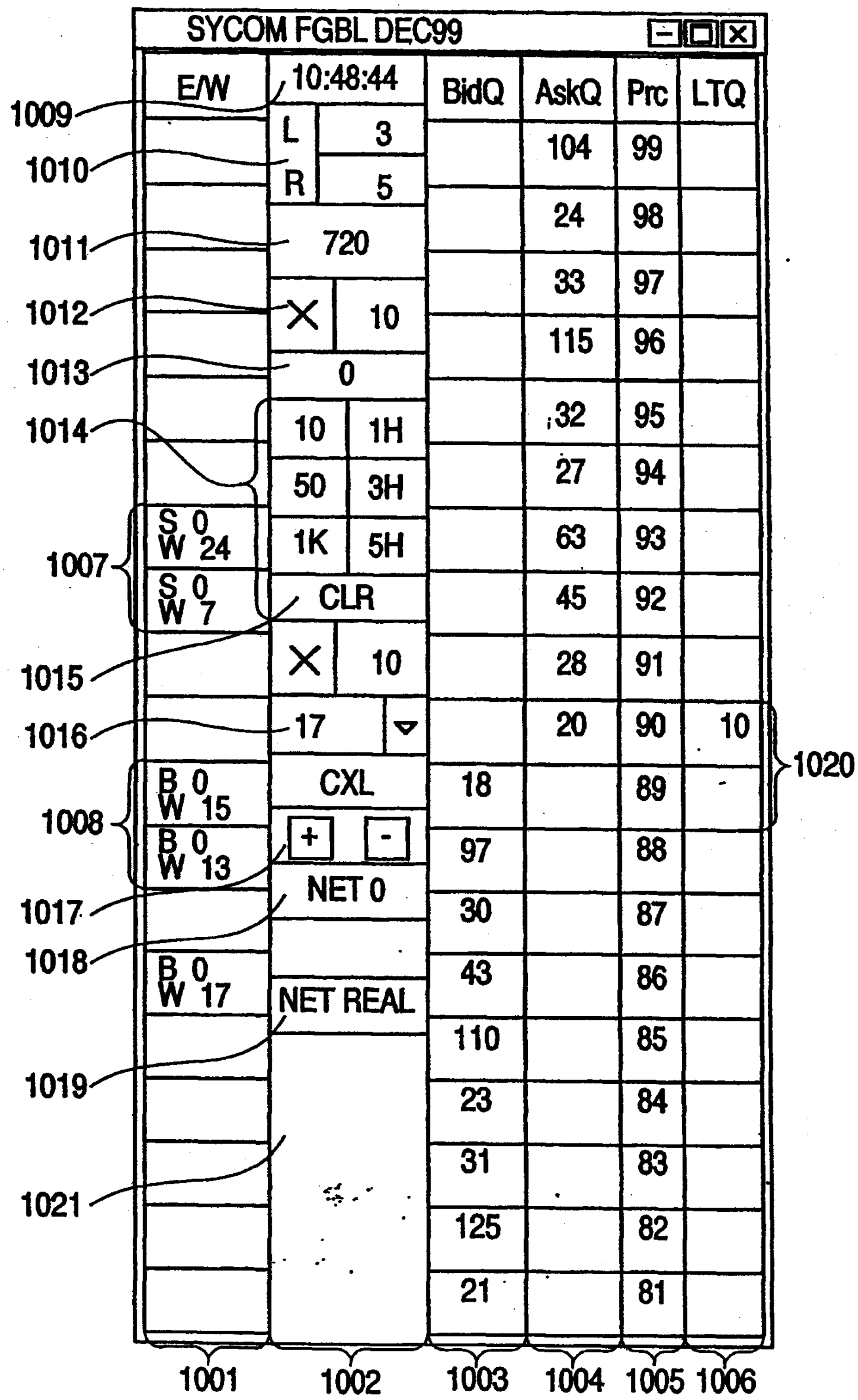
SYCOM FGBL DEC99
E/W
10:48:44
BidQ
AskQ
Prc
LTQ
L 3
R 5
720
10
0
10 1H
50 3H
1K 5H
CLR
10
17
CXL
+ -
NET 0
NET REAL
S 0 W 24
S 0 W 7
B 0 W 15
B 0 W 13
B 0 W 17
18
97
30
43
110
23
31
125
21
104
24
33
115
32
27
63
45
28
20
99
98
97
96
95
94
93
92
91
90
89
88
87
86
85
84
83
82
81
10
1001
1002
1003
1004
1005
1006
1007
1008
1009
1010
1011
1012
1013
1014
1015
1016
1017
1018
1019
1020
1021

FIG. 4

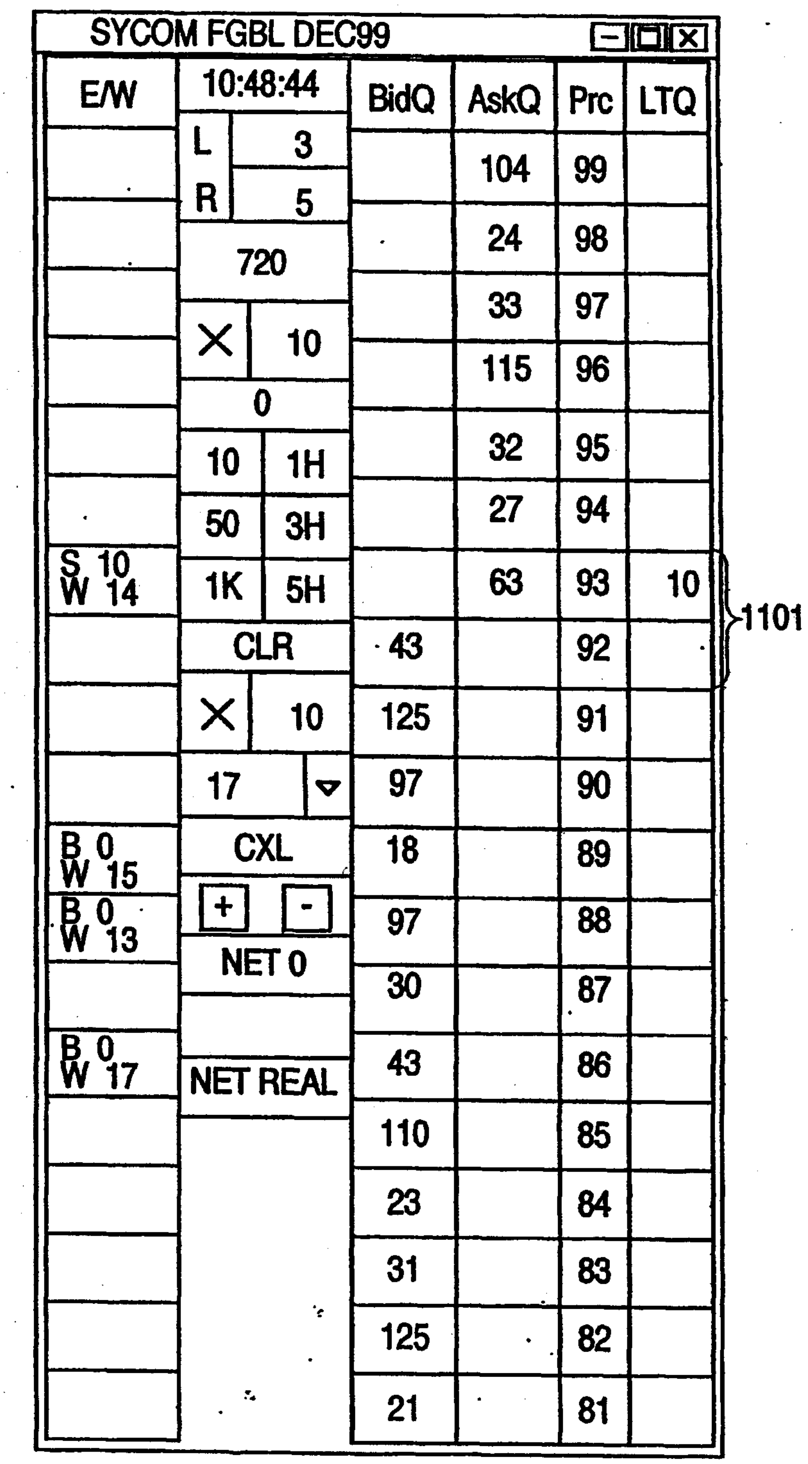
SYCOM FGBL DEC99
E/W
10:48:44
BidQ
AskQ
Prc
LTQ
L 3
R 5
720
10
0
10 1H
50 3H
1K 5H
CLR
10
17
CXL
NET 0
NET REAL
S 10 W 14
B 0 W 15
B 0 W 13
B 0 W 17
104 99
24 98
33 97
115 96
32 95
27 94
63 93 10
43 92
125 91
97 90
18 89
97 88
30 87
43 86
110 85
23 84
31 83
125 82
21 81
1101

FIG. 5

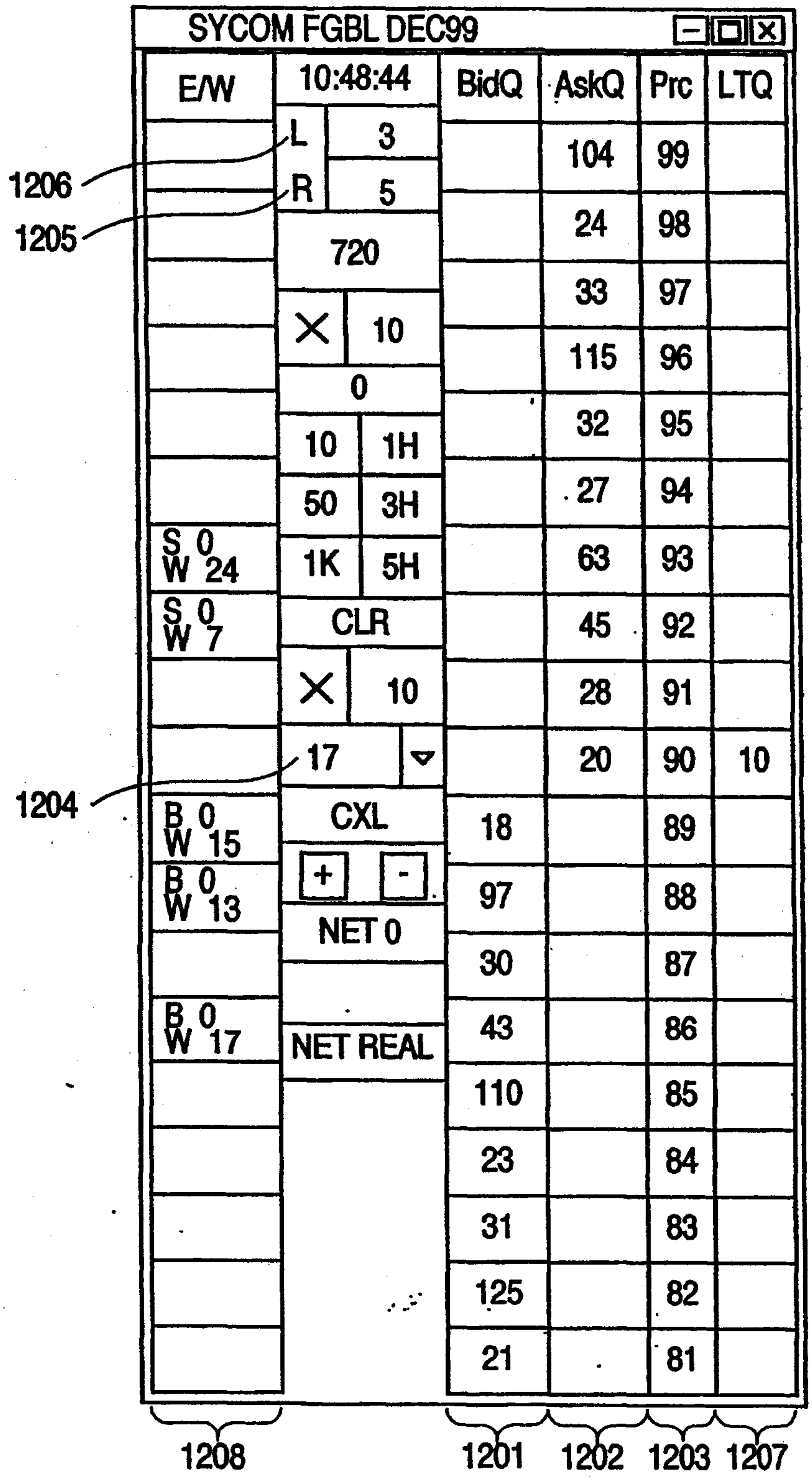
SYCOM FGBL DEC99
E/W
10:48:44
BidQ
AskQ
Prc
LTQ
L 3
R 5
720
10
0
10 1H
50 3H
1K 5H
CLR
10
17
CXL
+ -
NET 0
NET REAL
S 0 W 24
S 0 W 7
B 0 W 15
B 0 W 13
B 0 W 17
104 99
24 98
33 97
115 96
32 95
27 94
63 93
45 92
28 91
20 90 10
18 89
97 88
30 87
43 86
110 85
23 84
31 83
125 82
21 81
1206
1205
1204
1208
1201
1202
1203
1207

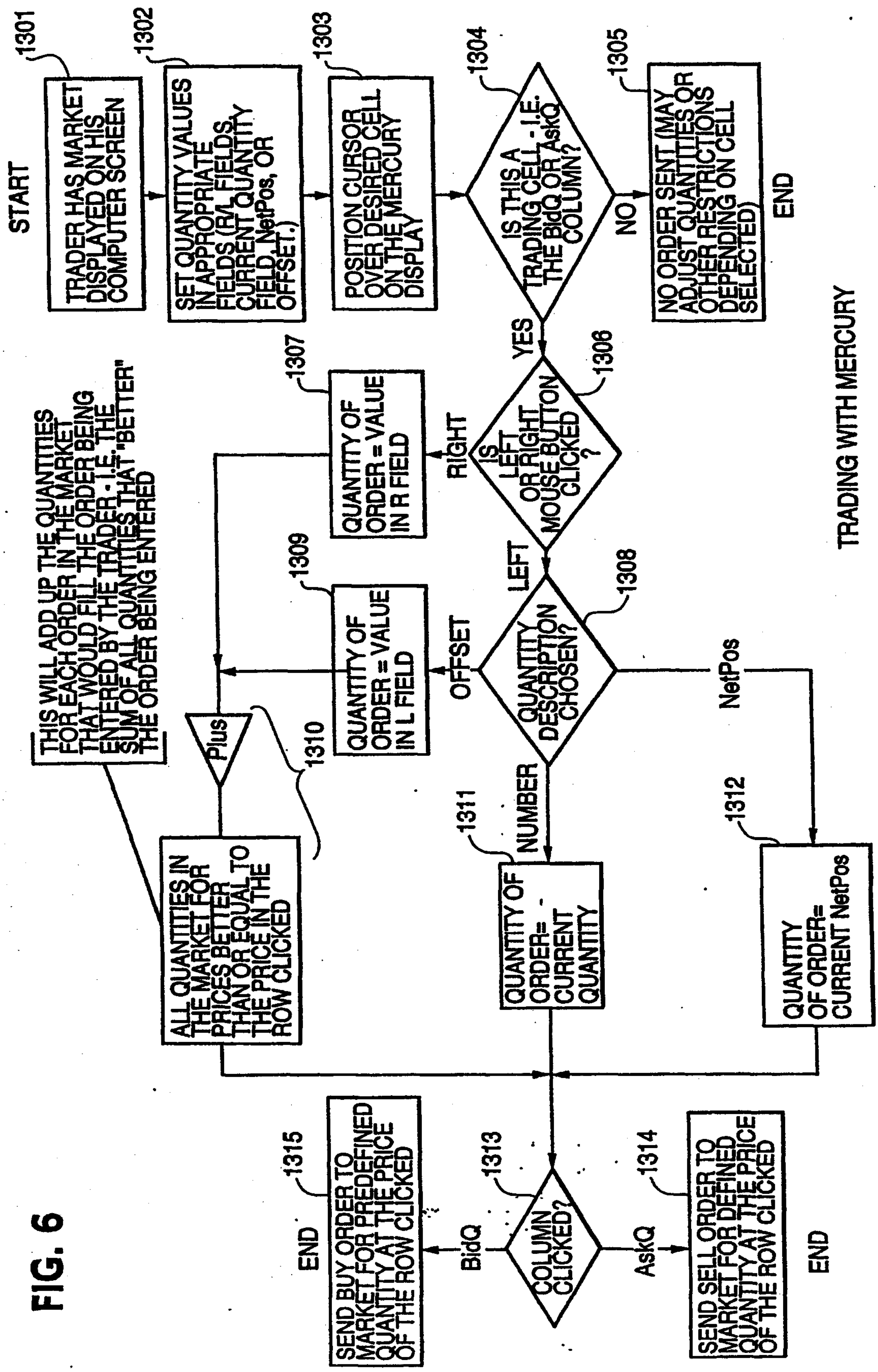
START
TRADER HAS MARKET DISPLAYED ON HIS COMPUTER SCREEN
1301
SET QUANTITY VALUES IN APPROPRIATE FIELDS (R/L FIELDS, CURRENT QUANTITY FIELD, NetPos, OR OFFSET.)
1302
POSITION CURSOR OVER DESIRED CELL ON THE MERCURY DISPLAY
1303
IS THIS A TRADING CELL - I.E. THE BidQ OR AskQ COLUMN?
1304
NO
NO ORDER SENT (MAY ADJUST QUANTITIES OR OTHER RESTRICTIONS DEPENDING ON CELL SELECTED)
1305
END
YES
IS LEFT OR RIGHT MOUSE BUTTON CLICKED ?
1306
RIGHT
QUANTITY OF ORDER = VALUE IN R FIELD
1307
LEFT
QUANTITY DESCRIPTION CHOSEN?
1308
OFFSET
QUANTITY OF ORDER = VALUE IN L FIELD
1309
Plus
1310
THIS WILL ADD UP THE QUANTITIES FOR EACH ORDER IN THE MARKET THAT WOULD FILL THE ORDER BEING ENTERED BY THE TRADER - I.E. THE SUM OF ALL QUANTITIES THAT "BETTER" THE ORDER BEING ENTERED
ALL QUANTITIES IN THE MARKET FOR PRICES BETTER THAN OR EQUAL TO THE PRICE IN THE ROW CLICKED
NUMBER
QUANTITY OF ORDER= - CURRENT QUANTITY
1311
NetPos
QUANTITY OF ORDER= CURRENT NetPos
1312
COLUMN CLICKED?
1313
BidQ
SEND BUY ORDER TO MARKET FOR PREDEFINED QUANTITY AT THE PRICE OF THE ROW CLICKED
1315
END
AskQ
SEND SELL ORDER TO MARKET FOR DEFINED QUANTITY AT THE PRICE OF THE ROW CLICKED
1314
END
TRADING WITH MERCURY

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5297031 A